# EUROPEAN PATENT APPLICATION

(11) **EP 3 099 054 A1**
(43) Date of publication of application: **30.11.2016**
(21) Application number: 15305820.1
(22) Date of filing: 29.05.2015
(51) Int. Cl.: H04N 5/225, H04N 5/232, G06T 5/00

(54) **METHOD AND APPARATUS FOR DETERMINING A FOCAL STACK OF IMAGES FROM LIGHT FIELD DATA ASSOCIATED WITH A SCENE, AND CORRESPONDING COMPUTER PROGRAM PRODUCT**

(71) Applicant: Thomson Licensing, 92130 Issy-les-Moulineaux (FR)
(72) Inventor: Jouet, Pierrick, 35576 CESSON SEVIGNE (FR); Le Clerc, Francois, 35576 CESSON SEVIGNE (FR); Sabater, Neus, 35576 CESSON SEVIGNE (FR)
(74) Representative: Huchet, Anne

(57) **Abstract**

A method for determining a focal stack (500) of images from light field data associated with a scene is disclosed. The focal stack (500) of images comprises a set of focused images (501, 502) of the scene, which are each associated to a focalization distance. Two consecutive focused images are spaced a sampling interval apart from each other in the focal stack. The sampling interval is adjusted as a function of a layout of the scene. The focal stack is built as the set of consecutive focused images spaced an adjusted sampling interval apart from each other.

## Description

### 1. Technical Field

The present disclosure relates to light-field imaging, and to technologies for acquiring and processing light-field data. More precisely, the present disclosure generally relates to a method and an apparatus for determining a focal stack of images from light field data associated with a scene, and finds applications in the domain of image or video rendering.

### 2. Background

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Conventional image capture devices render a three-dimensional scene onto a two-dimensional sensor. During operation, a conventional capture device captures a two-dimensional (2-D) image representing an amount of light that reaches a photosensor (or photodetector) within the device. However, this 2-D image contains no information about the directional distribution of the light rays that reach the photosensor (which may be referred to as the light-field). Depth, for example, is lost during the acquisition. Thus, a conventional capture device does not store most of the information about the light distribution from the scene.

Light-field capture devices (also referred to as "light-field data acquisition devices") have been designed to measure a four-dimensional (4D) light-field of the scene by capturing the light from different viewpoints of that scene. Thus, by measuring the amount of light traveling along each beam of light that intersects the photosensor, these devices can capture additional optical information (information about the directional distribution of the bundle of light rays) for providing new imaging applications by post-processing. The information acquired/obtained by a light-field capture device is referred to as the light-field data. Light-field capture devices are defined herein as any devices that are capable of capturing light-field data. There are several types of light-field capture devices, among which:
- plenoptic devices, which use a microlens array placed between the image sensor and the main lens, as described in document US 2013/0222633**;**
- a camera array, where all cameras image onto a single shared image sensor.

The light field data may also be simulated with Computer Generated Imagery (CGI), from a series of 2-D images of a scene each taken from a different viewpoint by the use of a conventional handheld camera.

Light-field data processing comprises notably, but is not limited to, generating refocused images of a scene, generating perspective views of a scene, generating depth maps of a scene, generating extended depth of field (EDOF) images, generating stereoscopic images, and/or any combination of these.

The present disclosure focuses more precisely on how to use light-field data to generate a focal stack, which comprises a collection of images each of them being focused at a different focalization distance. Such a focal stack allows a user to change a focal point of the images by post-processing.

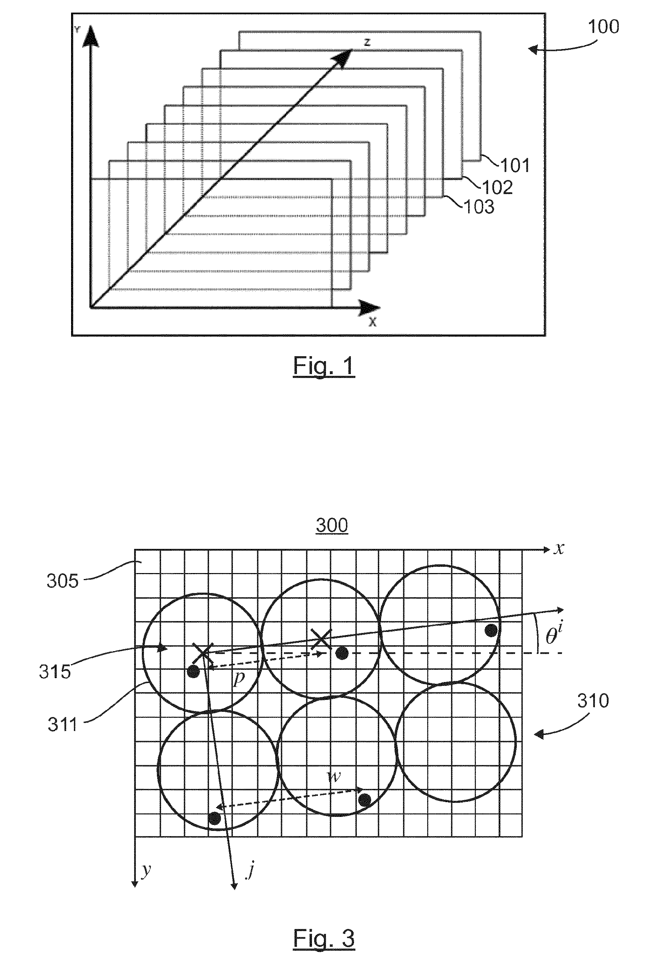

Dataset of the light field image or video (whether acquired by a plenoptic camera, a camera array or simulated with Computer Generated Imagery (CGI)) is reorganized to form a light data volume in the vicinity of the focal plane of a front lens similar to the light field generated by a lens in the vicinity of its focal plane. Such a focal stack 100 is schematically illustrated in **Figure 1****.**

A conventional focusing with a camera is simulated by selecting one of the images 101, 102, 103 within the focal stack 100, which corresponds to moving the focalization plane perpendicularly to the main optical axis of the camera.

Moreover, an AIF (All In Focus) image may be generated by focus fusion: the in-focus region is detected in each focal stack image, then all these in-focus regions are fused to form an AIF image.

State of Art methods for determining a focal stack use a regular sampling grid for the plane in focus: all pairs of consecutive images in the focal stack are spaced a same sampling interval apart from each other, starting from the foreground plane until the background plane of the scene. This means that the planes at which the images of the focal stack are in focus are equidistant.

Hence, as all focal stack images are regularly spaced, an object of interest in the scene (such as, for example, a human face) is processed in the same way as any other object in the scene, such as for example the background or any other object deprived from any interest for the viewer.

As a consequence, the AIF image may not be as accurate as it should be, and may show insufficient DOF (Depth of field) for some objects of interest in the scene. Also, the information in the focal stack may be insufficient for refocusing objects of interest, if the number of slices of the focal stack is small.

It would hence be desirable to provide a technique for determining a focal stack of images that would not show these drawbacks of the prior art. Notably, it would be desirable to provide such a technique, which would allow a finer rendering of objects of interest.

### 3. Summary

In one embodiment, a method for determining a focal stack of images from a light field dataset of a scene is provided. The focal stack of images comprises a set of focused images of the scene, where two consecutive focused images are spaced a sampling interval apart from each other in the focal stack.

Such a method comprises:
- adjusting the sampling interval as a function of a layout of the scene;
- determining the focal stack as the set of consecutive focused images spaced an adjusted sampling interval apart from each other.

The present disclosure thus relies on a novel and inventive approach of determining a focal stack of images from light-field data. Actually, the different focused images of the scene are not regularly spaced in the focal stack, as was the case in the prior art. Instead of such a regular spacing, the focus of image sample in the focal stack is modulated by the layout of the scene. In other words, the planes at which the images of the focal stack are focused are not homogeneously spaced. For example, these planes are closer when an object of interest appears in the scene. This method allows to better cover the scene with the same number of slices in the focal stack, meaning that no extra storage is needed.

It must be noted that the light field dataset may be captured by a plurality of image capture devices (such as a camera array) or by a plenoptic image capture device. It may also be simulated with Computer Generated Imagery (CGI).

According to another embodiment, said adjusting comprises choosing a length of said sampling interval among at least two sampling interval lengths as a function of at least one identified object in said scene.

According to a further embodiment, each focused image of the scene is associated with a focalization distance, which corresponds to the distance between the acquisition system and the focalization plane. A shorter sampling interval is used for focalization distances targeted to correspond to a position of an object of interest identified in the scene, and a longer sampling interval is used for focalization distances located between two objects of interest, or between an object of interest and either a background plane or a foreground plane of said scene.

One, or several objects of interest may be identified in the scene. The method of the present disclosure thus allows modulating the sampling grid in the focal stack depending on the different objects of interest identified in the scene, and their relative positions, with more samples corresponding to the objects of interest provided to build the focal stack.

The quality of Depth of field will hence be increased when the All In Focus image of the scene will be computed. The visualization experience of the user will also be improved, thanks to a finer sampling, and hence a finer rendering, of the objects of interest.

For focalization distances which do not correspond to a zone of interest in the scene (either background, or foreground, or object of interest), the need to get associated samples in the focal stack is low. The sampling interval may be increased for such zones. The computing of images located between objects of interest and the foreground and background planes can be linearly driven by position or depth. According to a further embodiment, such a method also comprises:
- assessing a depth of said object of interest;
- determining a number of focused images (slices of the focal stack) to be spaced a shorter sampling interval apart from each other, as a function of said assessed depth.

By depth of the object, it is meant here the distance from the front to the back of the object, the front of the object being the part of the object which is the closest to the image capture device, and the back of the object being the part of the object which is the furthest from the image capture device.

Hence, the deeper the object of interest, the higher number of images in the focal stack (or the higher number of samples) associated to this object of interest. Starting from a focalization distance corresponding to a position of the object of interest in the scene (i.e. distance from the camera), the sampling interval is reduced, so as to increase the number of images in the focal stack associated to the object of interest, up to a focalization distance corresponding to the back of the object of interest (position + depth).

In yet a further embodiment, the focal stack does not comprise any focused image associated with a focalization distance which does not correspond either to an object of interest identified in the scene, nor to a foreground plane of the scene, nor to a background plane of the scene.

According to a further embodiment, the object of interest belongs to the group comprising:
- a salient object (as described for example in **"Saliency Object Detection" by Jie Feng, Yichen Wei, Litian Tao, Chao Zhang, and Jian Sun);**
- a face;
- part or whole of a human body;
- a foreground object (identified for example via disparity estimation, as described in **ICCP2014, "Accurate Disparity Estimation for Plenoptic Images" by N. Sabater, V. Drazic, M. Seifi, G. Sandri and P. Perez);**
- an object selected by a user (for example, an object manually selected by a user on a certain frame and tracked along a video sequence).

According to a further embodiment, such a method also comprises:
- estimating disparities from said light field data set or from a matrix of views generated from said light field data set;
- computing said position of said object of interest in said scene from said estimated disparities.

It is well known to compute a matrix of views from image raw data, acquired for example with a plenoptic camera. Such a matrix of views allows computing disparities and extracting predominant disparity from the matrix of views, in order to identify objects of interest and compute their position (i.e. distance to the camera) in the scene. Once this position is known, it is possible to realize an adaptive sampling, so as to adapt the sampling grid of the focal stack to the composition of the scene. Disparities may also be estimated directly from the raw data.

The present disclosure also concerns an apparatus for determining a focal stack of images from a light field dataset of a scene, the focal stack of images comprising a set of focused images of the scene, where two consecutive focused images are spaced a sampling interval apart from each other in the focal stack.

Such an apparatus comprises:
- an adjusting module for adjusting the sampling interval as a function of a layout of the scene;
- a module for determining the focal stack as the set of consecutive focused images spaced an adjusted sampling interval apart from each other.

Both modules may be embedded on the same processor.

According to an embodiment, the adjusting module is configured for choosing a length of the sampling interval among at least two sampling interval lengths as a function of at least one identified object in the scene.

Each focused image of said scene being associated with a focalization distance, the adjusting module is configured for choosing:
- a shorter sampling interval for focalization distances targeted to correspond to a position of an object of interest identified in the scene;
- a longer sampling interval for focalization distances located between two objects of interest, or between an object of interest and either a background plane or a foreground plane of said scene.

According to a further embodiment, such an apparatus also comprises:
- a module for assessing a depth of the object of interest;
- a module for determining a number of focused images to be spaced a shorter sampling interval apart from each other, as a function of the assessed depth.

By depth, it is meant here the distance from the front to the back of the object of interest.

According to yet a further embodiment, such an apparatus also comprises:
- a disparity estimation module for estimating disparities from said light field data set or from a matrix of views generated from said light field data set;
- a computing unit for computing said position of said object of interest in said scene from said estimated disparities.

These additional modules may be embedded on the same processor as the first modules described above.

The present disclosure also concerns a plenoptic image capture device comprising an apparatus as described above.

The present disclosure also concerns a computer program product downloadable from a communication network and/or recorded on a medium readable by a computer and/or executable by a processor, comprising program code instructions for implementing a method for determining a focal stack as described above.

The present disclosure also concerns a non-transitory computer-readable medium comprising a computer program product recorded thereon and capable of being run by a processor, including program code instructions for implementing a method for determining a focal stack as described above.

Such a computer program may be stored on a computer readable storage medium. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read--only memory (ROM); an erasable programmable read--only memory (EPROM or Flash memory); a portable compact disc read--only memory (CD-ROM); an optical storage device; a magnetic storage device; or any suitable combination of the foregoing.

It is to be understood that both the foregoing general description and the following detailed description are exemplary and explanatory and are not restrictive of the invention, as claimed.

It must also be understood that references in the specification to "one embodiment" or "an embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

### 4. Brief description of the drawings

Embodiments of the invention can be better understood with reference to the following description and drawings, given by way of example and not limiting the scope of protection, and in which:
- **Figure 1** is a diagram illustrating an example of a focal stack of images;
- **Figure 2** is a diagram illustrating examples of a plenoptic camera and a multi-array camera;
- **Figure 3** shows a plan view schematically illustrating an example of sensor regions arrange on the sensing surface of the image sensor;
- **Figure 4** schematically illustrates a scene with objects of interest, and the way the focal stack of images could be adapted to such a scene, according to embodiments of the present disclosure;
- **Figure 5** is a diagram illustrating an example of a focal stack of images, which has been adapted to the scene of **figure 4****;**
- **Figure 6** is a schematic block diagram illustrating an example of an apparatus for determining an adaptive focal stack according to an embodiment of the present disclosure;
- **Figure 7** is a flow chart for explaining a process for determining an adaptive focal stack according to an embodiment of the present disclosure;
- **Figure 8** shows a plan view schematically illustrating an array of microlenses images, used for estimating a position of an object of interest in the scene, according to an embodiment of the present disclosure;
- **Figure 9** shows a plan view schematically illustrating a matrix of sub-aperture images, used for estimating a position of an object of interest in the scene, according to an embodiment of the present disclosure.

The components in the figures are not necessarily to scale, emphasis instead being placed upon illustrating the principles of the invention.

### 5. Detailed description

The general principle of the present disclosure consists in a new way of determining a focal stack in a light field context, by adapting the sampling grid in the focal stack as a function of the scene and its layout.

A description will now be given of a method, an apparatus and a computer-readable storage medium for determining a focal stack of images in embodiments of the present disclosure.

### 5.1 Light field cameras

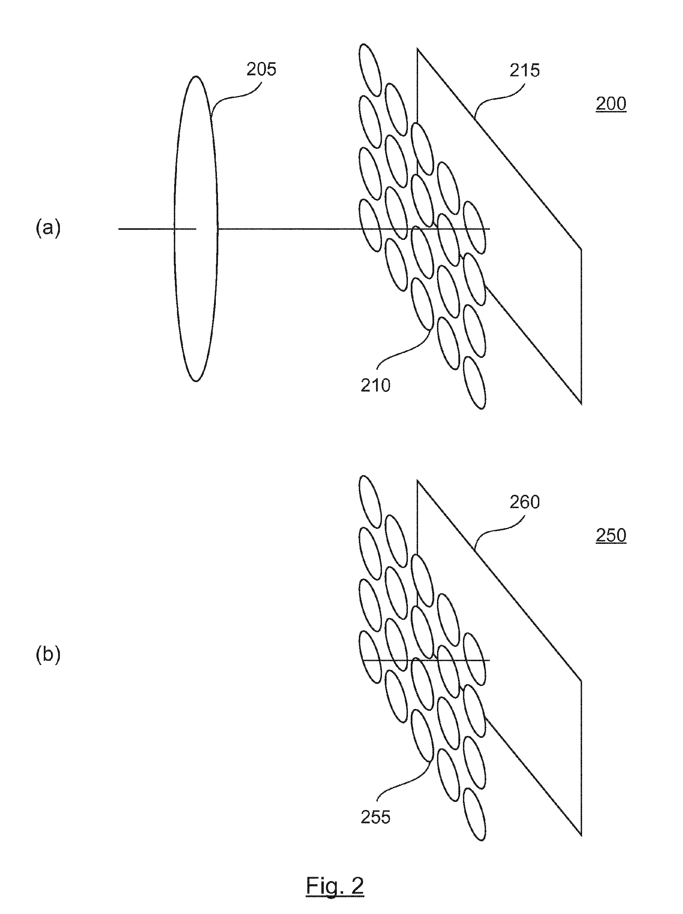

**Figure 2** is a diagram illustrating examples of a plenoptic camera and a multi-array camera. Light-field cameras are capable of recording 4D light-field data. For instance, 4D light-field cameras may be: a plenoptic camera 200 comprising a main lens 205, a microlens array 210 and an image sensor 215 **(****figure 2A****);** or a multi-array camera 250 comprising a lens array 255 and a single image sensor 260 **(****figure 2B****).** For example, a multi-camera array can be a Pelican array camera as the one depicted in the document WO 2014149403 A1**.**

In the example of the plenoptic camera 200 as shown in **Figure 2A****,** the main lens 205 receives light from an object (not shown) in an object field of the main lens 205 and passes the light through an image field of the main lens 205. The microlens array 210 includes a plurality of microlenses 215 arranged in a two-dimensional array. Obviously, a main lens 205 can be a more complex optical system as the one depicted for example in Figures 12 and 13 of document GB2488905**.**

**Figure 3** is a plan view schematically illustrating an example of sensor regions arranged on the sensing surface of the image sensor. As illustrated in **Figure 3****,** the image sensor 300 includes a plurality of pixels 305 arranged in a two-dimensional array, and receives the light from the object through the microlens array 310. Each of the microlenses 311 of the microlens array 310 has the lens properties to direct the light to a circular area 315 on the image sensor 300. An outer contour of the circular area 315 may represent the shape of a microlens image formed and captured on the image sensor 300, which shape depends on the shape of the microlens 311. Amongst all of the pixels 305 on the image sensor 300, only the pixels 305 located substantially inside the circular area 315 contribute to the imaging. In other words, a pixel area (or sensing area) of each pixel 305 that contributes to the imaging is located substantially inside the circular area 315.

The image sensor 300 of light-field camera records an image comprising a collection of 2D microlens images arranged within a 2D image. Each microlens 311 of the microlens array 310 forms a microlens image represented by a circular area 315. Coordinates of pixels 305 on the sensor 300 is indicated by (*x, y*) in the x-y coordinate system on the surface of the image sensor 300 as shown in **figure 3****.** The distance *p* shown in **figure 3** is the distance between the two consecutive microlens images. Microlenses 311 are chosen such that the distance *p* is larger than the size of the pixel 305. The distance w shown in **figure 3** is the disparity distance between the two consecutive microlens images. Microlens images are referred by their respective coordinate (*i*, *j*) in the i-j coordinate system on the surface of the image sensor 300 as shown in **figure 3****.** The distances *p* and w are given in unit of pixel. They are converted into physical unit of distance (meters) *P* and *W*, respectively, by multiplying the pixel size *δ*: *W* = *δw* and *P = δp.* These distances depend on the characteristics of the light field camera.

### 5.2 Focal stack

As illustrated in **figure 1****,** focal stack 100 is a collection of *N* images *Rₙ* (with *n* ∈ [1,*N*]) focused at different planes, which define a cube of images (101, 102, 103...), where *N* is a user selected number of images. Hence, the distance or distance interval (on the z axis) between two consecutive images in the focal stack 100 corresponds to the distance between two focal planes linked to these two consecutive images.

The computation of the focal stack described in this embodiment is on the assumption that a 4D light field is recorded by a single image sensor with a lens array and optionally a main lens. However, the computation of a focal stack is not limited to the 4D light field recorded by such type of light-field camera, therefore it should be noted that it is possible to compute a focal stack of re-focused images based on the 4D light field recorded by any types of light field cameras.

### 5.3 Adapting the focal stack to the layout of the scene

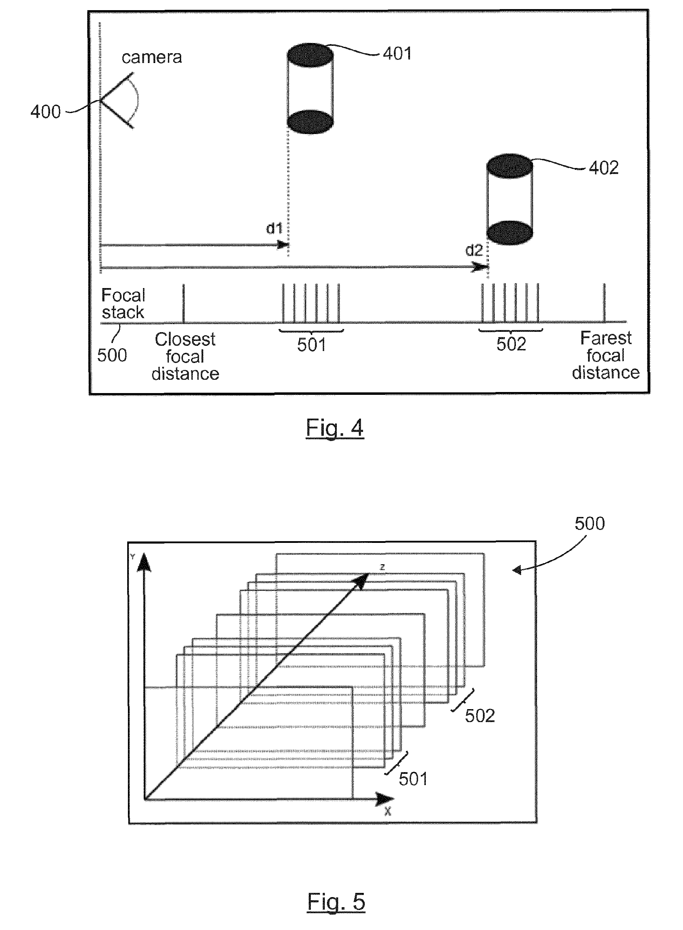

According to an embodiment of the present disclosure, an approach to adapt the focal stack of images to the layout of the scene is provided to the user. **Figure 4** shows an example of a scene captured by a camera 400. Such a scene comprises two objects of interest 401 and 2. Object of interest 401 is located at a distance d1 from camera 400, while the other object of interest 402 is located at a distance d2 from camera 400.

When object of interest 401 or 402 is detected in the scene, its position (distance d1 or d2) is known, so focus value can be computed. It is then also possible to compute close focus values for this position. This is illustrated in **figure 4****,** where, at distances d1 and d2, more images are computed for the focal stack. Focal stack 500 hence comprises a focused image corresponding to the closest focal distance, a focused image corresponding to the furthest focal distance, and in-between, two sets of focused images:
- a first group 501 of focused images associated to object of interest 401;
- a second group 502 of focused images associated to object of interest 402.

The computing of images located between objects of interest and the other planes (background or foreground for example) can be linearly driven by depth.

In a variant, the distance between two consecutive images (also named a step) in the focal stack is defined by default as being small (two consecutive images being associated with focal planes spaced from each other from around 20 cm in the scene space). Then, a user can decide to select a zone which he/she is not interested in (for example objects positioned in the background), and a focal stack is determined by taking into account the fact that the objects in the background are not important (therefore, the distance between these images is increased compared to the default value in the determined focal stack).

**Figure 5** illustrates the focal stack 500, which has been built with an irregular sampling grid adapted to the scene.

The number of focused images in the set 501 or 502 associated to object of interest 401 or 402 depends on the depth of the object of interest, where the depth corresponds to the distance from the front to the back of the object of interest (the front of the object corresponding to the part of the object which is the closest to the camera, and the back of the object corresponding to the part of the object which is the furthest from the camera). The deeper the object of interest, the more images in the corresponding set of focused images in the focal stack, allowing a finer rendering of the object of interest in an AIF image, or better refocusing capabilities of the scene.

Actually, thanks to embodiments of the present disclosure, more "in-focus regions" are attached to objects of interest. An AIF image corresponds to a focused image in which all objects appear in-focus, and is composed by focus fusion. For objects of interest, the quality of the DoF (Depth of Field) will hence increase in the AIF image.

Moreover, the number of slices of the focal stack associated to the object of interest is high, which will provide more information to the user, when he/she wants to refocus the scene on this peculiar object of interest.

According to embodiments of the present disclosure, objects of interest 401 and 402 may be:
- a salient object (as described for example in **"Saliency Detection on Light Field" by Nianyi Li, Jinwei Ye, Yu Ji, Haibin Ling, and Jingyi Yu);**
- a face, or part or whole of a human body, detected in the scene;
- a foreground object (identified for example via disparity estimation, as described in **ICCP2014, "Accurate Disparity Estimation for Plenoptic Images" by N. Sabater, V. Drazic, M. Seifi, G. Sandri and P. Perez);**
- an object selected by a user (for example, an object manually selected by a user on a certain frame and tracked along a video sequence).

In the same scene, one or several objects of interest can be detected. The sampling grid for the focal stack will adapt to as many objects of interest as detected in the scene.

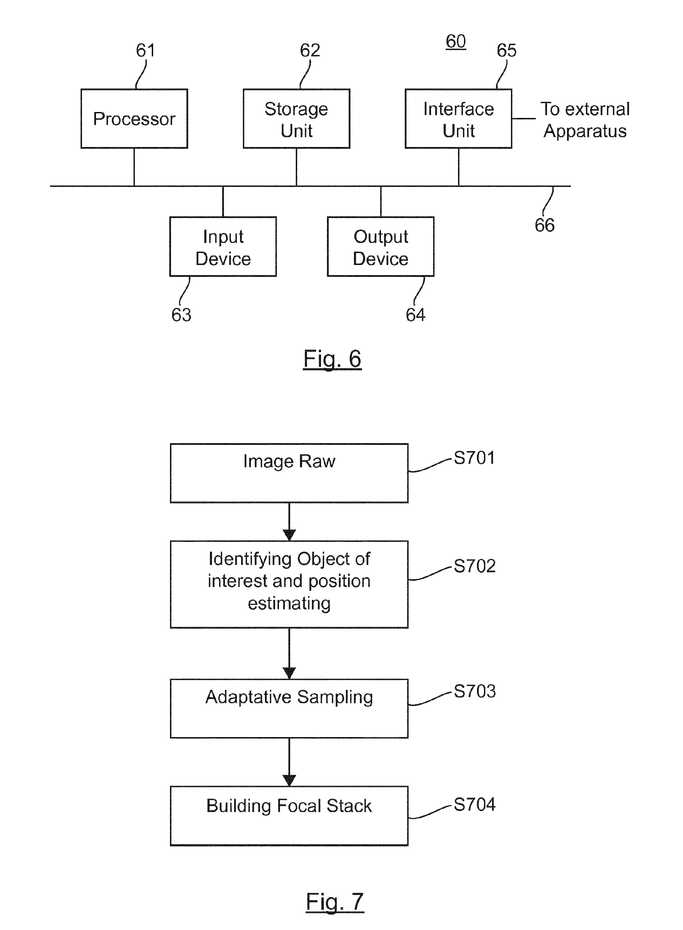

**Figure 6** is a schematic block diagram illustrating an example of an apparatus for determining an adaptive focal stack of images according to an embodiment of the present disclosure.

An apparatus 60 illustrated in **Figure 6** includes a processor 61, a storage unit 62, an input device 63, a display device 64, and an interface unit 65 which are connected by a bus 66. Of course, constituent elements of the computer apparatus 60 may be connected by a connection other than a bus connection using the bus 66.

The processor 61 controls operations of the apparatus 60. The storage unit 62 stores at least one program to be executed by the processor 61, and various data, including data of 4D the light field images captured and provided by a light field camera, parameters used by computations performed by the processor 61, intermediate data of computations performed by the processor 61, and so on. The processor 61 may be formed by any known and suitable hardware, or software, or a combination of hardware and software. For example, the processor 61 may be formed by dedicated hardware such as a processing circuit, or by a programmable processing unit such as a CPU (Central Processing Unit) that executes a program stored in a memory thereof.

The storage unit 62 may be formed by any suitable storage or means capable of storing the program, data, or the like in a computer-readable manner. Examples of the storage unit 62 include non-transitory computer-readable storage media such as semiconductor memory devices, and magnetic, optical, or magneto-optical recording media loaded into a read and write unit. The program causes the processor 61 to perform a process for determining an adaptive focal stack of images according to an embodiment of the present disclosure as described hereinafter with reference to **Figure 7****.**

The input device 63 may be formed by a keyboard, a pointing device such as a mouse, or the like for use by the user to input commands, to make user's selections of objects of interest within the scene. The output device 64 may be formed by a display device to display, for example, a Graphical User Interface (GUI), images of the focal stack, or a depth map image. The input device 63 and the output device 64 may be formed integrally by a touchscreen panel, for example.

The interface unit 65 provides an interface between the apparatus 60 and an external apparatus. The interface unit 65 may be communicable with the external apparatus via cable or wireless communication. In this embodiment, the external apparatus may be a light field camera. In this case, data of 4D light field images captured by the light field camera can be input from the light field camera to the apparatus 60 through the interface unit 65, then stored in the storage unit 62.

In this embodiment the apparatus 60 is exemplary discussed as it is separated from the light field camera and they may communicate with each other via cable or wireless communication, however it should be noted that the apparatus 60 can be integrated with such a light field camera.

Although only one processor 61 is shown on **figure 6****,** it must be understood that such a processor may comprise different modules and units embodying the functions carried out by apparatus 60 according to embodiments of the present disclosure, such as:
- an adjusting module for reducing or increasing the sampling interval according to the layout of the scene;
- a module for determining the focal stack as the set of consecutive focused images spaced an adjusted sampling interval apart from each other;
- a module for identifying objects of interest in the scene;
- a module for assessing the depth of objects of interest;
- a module for determining the number of focused images to be associated to each object of interest;
- a disparity estimation module for estimating disparities from the light field data set or from a matrix of views generated from the light field data set;
- a computing unit for computing the position of objects of interest in the scene from the estimated disparities.

These modules and units may also be embodied in several processors 61 communicating and co-operating with each other.

**Figure 7** is a flow chart for explaining a process for determining an adaptive focal stack of images according to an embodiment of the present disclosure.

At step S701 illustrated in **Figure 7****,** 4D light field data associated with a scene is captured by a user with a light field camera. The captured 4D light field data is transferred from the light field camera to the apparatus 60 **(****figure 6****)** via the interface unit 65, then stored into the storage unit 62 of the apparatus. Such a data transfer may be controlled by the processor 61 of the apparatus 60. In the case where the apparatus 60 is integrated within the light field camera, the captured 4D light field data may be directly stored into the storage unit 62. In the state of the art, there are several ways to represent (or define) 4D light-field data. Indeed, in the Chapter 3.3 of the Phd dissertation thesis entitled ***"***Digital Light Field Photography" by Ren Ng, published in July 2006, three different ways to represent 4D light-field data are described. Firstly, a 4D light-field data can be represented, when recorded by a plenoptic camera as the one depicted in Figure 2(a) for example, by a collection of micro-lens images. 4D light-field data in this representation are named raw images (or raw 4D light-field data). Secondly, 4D light-field data can be represented, either when recorded by a plenoptic camera or by a camera array, by a set of sub-aperture images. A sub-aperture image corresponds to a captured image of a scene from a point of view, the point of view being slightly different between two sub-aperture images. These sub-aperture images give information about the parallax and depth of the imaged scene. Thirdly, 4D light-field data can be represented by a set of epipolar images (see for example the article entitled ***"***Generating EPI Representation of a 4D Light Fields with a Single Lens Focused Plenoptic Camera", by S. Wanner et al., published in the conference proceedings of ISVC 2011). In another embodiment, one skilled in the art could use 4D light-field data based on a two planes parametrization.

At step S702, the processor 61 of the apparatus 60 identifies one of several objects of interest in the scene and estimates their position (i.e. distance z to the camera). Position may be estimated directly from the raw data acquired at step S701. It may also be estimated by using a matrix of views (i.e. the set of sub-aperture images) and determining disparities between these views, or sub-aperture images.

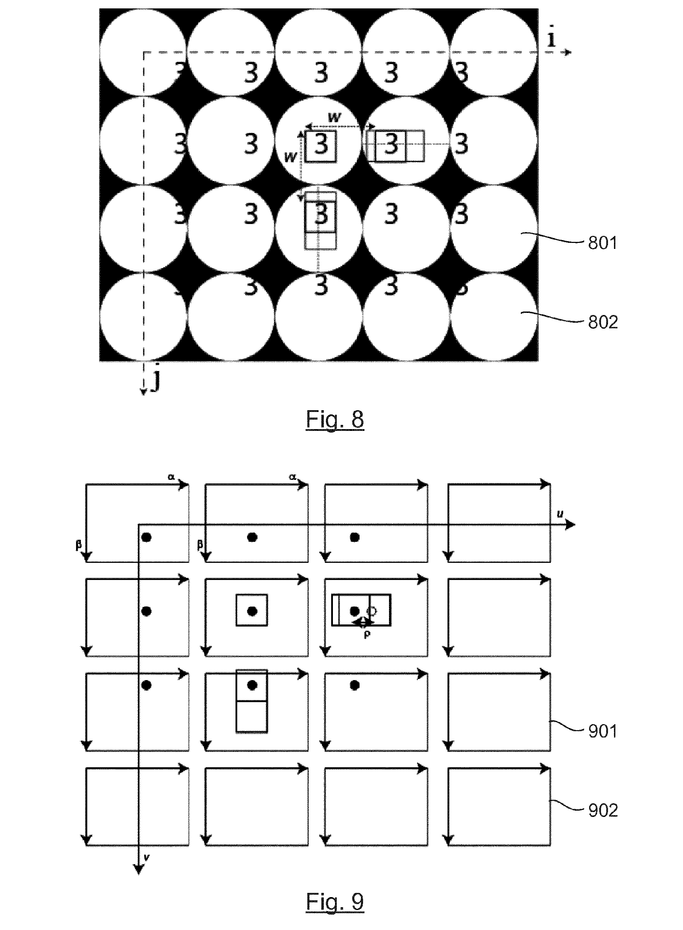

**Figures 8 and 9** illustrate two exemplary embodiments for estimating the position of objects of interest in the scene at step S702.

**Figure 8** illustrates an array of micro-lens images 801, 802 as captured by a plenoptic camera, comprising a main lens and an array of micro-lenses set between the main lens and the sensor.

According to the embodiment of **figure 8****,** at step S702, the processor 61 of the apparatus 60 estimates a depth-map directly on the micro-images 801, 802. The replication distance w between two micro-images is computed by estimating the shifts between the consecutive micro-images. Shifts are estimated using patches extracted from one view and the next micro-images on the left or below. The pixel values of the 4D Light Field are replaced by the replication distance w estimated locally. This image is then re-focused to produce a depth-map image in unit of replication distance w.

This method is particularly adequate if the micro-images are quite large with *p* > 20 *pixels* for instance (with p the distance between two consecutive microlens images, see **figure 3**) (as described for example in the article entitled ***"***Lens-based Depth Estimation for Multi-Focus Plenoptic Cameras" by Oliver Fleischmann and Reinhard Koch**).**

According to the exemplary embodiment of **figure 9****,** at step S702, the processor 61 of the apparatus 60 generates a matrix of views, or sub-aperture images 901, 902, based on the 4D light field image data, by demultiplexing the raw image (as described in the article entitled ***"Accurate Depth Map Estimation from a Lenslet Light Field Camera"*** by Hae-Gon Jeon Jaesik Park Gyeongmin Choe Jinsun Park,Yunsu Bok Yu-Wing Tai In So Kweon). Demultiplexing consists in reorganizing the pixels of the raw image in such a way that all pixels capturing the light rays with a certain angle of incidence are stored in the same image creating the so-called sub-aperture images. Each sub-aperture image 901, 902 is a projection of the scene under a different angle. The set of sub-aperture images creates a block matrix where the central image stores the pixels capturing the light rays perpendicular to the sensor. The generated matrix of sub-aperture images is stored in the storage unit 72.

The processor 61 of the apparatus 60 then applies on the sub-aperture images a procedure, which is equivalent to the one described in relation to **figure 8****.** The shifts are estimated locally between the sub-aperture images. One disparity map can be computed for each couple of sub-aperture images, which is stored in the storage unit 72. As an example, computing disparity maps is performed by using the block-matching disparity estimation algorithm described in ICCP2014, "Accurate Disparity Estimation for Plenoptic Images" by N. Sabater, V. Drazic, M. Seifi, G. Sandri and P. Perez.

Once a depth map (embodiment of **figure 8**) or a disparity map (embodiment of **figure 9**) is computed, the processor 61 identifies one or several objects of interest in the scene and estimates their position (distance to the camera).

The object of interest can be automatically selected. For example, if we call d_{f} the foreground and d_{b} the background, points or objects with a depth value comprised in this interval are selected. Next, we can use them to initialize a segmentation processing (for example graph cut). The result of the segmentation will be the object of interest (details on graph cut technique are described in the article entitled ***"***Fast Approximate Energy Minimization via Graph Cuts" by Yuri Boykov Olga Veksler Ramin Zabih). A user selection through a graphic interface can also be considered.

At step S703, the processor 61 performs adaptive sampling of focused images of the scene. Knowing the distance z to the camera of objects of interest identified at step S702, the processor 61 reduces the sampling interval for focalization distances corresponding to such positions of objects of interest. More focused images of the scene are computed by processor 61 for zones of the scene corresponding to objects of interest, while less focused images of the scene are computed for zones of the scene located between objects of interest, or between a foreground or background plane of the scene and an object of interest. The sampling interval is hence reduced at focalization distances corresponding to a position of an object of interest; it is then increased at focalization distances corresponding to non-interesting zones of the scene. The processor 61 also computes a focused image of the scene corresponding to the closest focal distance and a focused image of the scene corresponding to the furthest focal distance.

At step S704, the processor 61 determines a focal stack of images from all focused images of the scene computed at step S703, where more samples corresponding to objects of interest are provided to build the focal stack. The focal stack of images, which is adapted to the composition of the scene (example of **figure 5**), is stored in the storage unit 62.

The steps S701 to S704 can be performed automatically by the processor 61 after the 4D light field data is provided to the apparatus 60.

Although not shown on **figure 7****,** the processor 61 may further generate an all-in-focus image of the scene, using the adapted focal stack, built with a non-linear sampling grid. This AIF image may be stored in the storage unit 62 and displayed on the display 64. It will show an increased quality of Depth of Field, as compared to State of Art methods for determining a focal stack, which use a regular sampling grid.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit", "module", or "system".

When the present principles are implemented by one or several hardware components, it can be noted that a hardware component comprises a processor that is an integrated circuit such as a central processing unit, and/or a microprocessor, and/or an Application-specific integrated circuit (ASIC), and/or an Application-specific instruction-set processor (ASIP), and/or a graphics processing unit (GPU), and/or a physics processing unit (PPU), and/or a digital signal processor (DSP), and/or an image processor, and/or a coprocessor, and/or a floating-point unit, and/or a network processor, and/or an audio processor, and/or a multi-core processor. Moreover, the hardware component can also comprise a baseband processor (comprising for example memory units, and a firmware) and/or radio electronic circuits (that can comprise antennas) which receive or transmit radio signals. In one embodiment, the hardware component is compliant with one or more standards such as ISO/IEC 18092 / ECMA-340, ISO/IEC 21481 / ECMA-352, GSMA, StoLPaN, ETSI / SCP (Smart Card Platform), GlobalPlatform (i.e. a secure element). In a variant, the hardware component is a Radiofrequency identification (RFID) tag. In one embodiment, a hardware component comprises circuits that enable Bluetooth communications, and/or Wi-fi communications, and/or Zigbee communications, and/or USB communications and/or Firewire communications and/or NFC (for Near Field) communications.

Furthermore, aspects of the present principles can take the form of a computer readable storage medium. Any combination of one or more computer readable storage medium(s) may be utilized.

Thus for example, it will be appreciated by those skilled in the art that the block diagrams presented herein represent conceptual views of illustrative system components and/or circuitry embodying the principles of the invention. Similarly, it will be appreciated that any flow charts, flow diagrams, state transition diagrams, pseudo code, and the like represent various processes which may be substantially represented in computer readable storage media and so executed by a computer or a processor, whether or not such computer or processor is explicitly shown.

Although the present disclosure has been described with reference to one or more examples, workers skilled in the art will recognize that changes may be made in form and detail without departing from the scope of the disclosure and/or the appended claims.

## Claims

1. A method for determining a focal stack (100; 500) of images from light field data associated with a scene,
said focal stack (100; 500) of images comprising a set of focused images (101-103; 501-502) of said scene, where two consecutive focused images are spaced a sampling interval apart from each other in said focal stack,
**wherein** it comprises:
- adjusting said sampling interval as a function of a layout of said scene;
- determining the focal stack (500) as the set of consecutive focused images spaced an adjusted sampling interval apart from each other.

2. The method of claim 1, **wherein** said adjusting comprises choosing a length of said sampling interval among at least two sampling interval lengths as a function of at least one identified object in said scene.

3. The method of claim 1 or 2, **wherein,** each focused image of said scene being associated with a focalization distance, a shorter sampling interval is used for focalization distances targeted to correspond to a position (d1, d2) of an object of interest (401, 402) identified in said scene, and a longer sampling interval is used for focalization distances located between two objects of interest, or between an object of interest and either a background plane or a foreground plane of said scene.

4. The method of claim 3, **wherein** it also comprises:
- assessing a depth of said object of interest;
- determining a number of focused images to be spaced a shorter sampling interval apart from each other, as a function of said assessed depth.

5. The method of any of claims 1 to 4, **wherein** said focal stack does not comprise any focused image associated with a focalization distance which does not correspond either to an object of interest identified in said scene, nor to a foreground plane of said scene, nor to a background plane of said scene.

6. The method of any of claims 3 to 5, **wherein** said object of interest belongs to the group comprising:
- a salient object;
- a face;
- part or whole of a human body;
- a foreground object;
- an object selected by a user.

7. The method of any of claims 3 to 6, **wherein** it also comprises:
- estimating disparities from said light field data set or from a matrix of views generated from said light field data set;
- computing said position (d1, d2) of said object of interest (401, 402) in said scene from said estimated disparities.

8. An apparatus for determining a focal stack (100; 500) of images from light field data associated with a scene, said focal stack of images comprising a set of focused images (101-103; 501-502) of said scene, where two consecutive focused images are spaced a sampling interval apart from each other in said focal stack,
**wherein** it comprises:
- an adjusting module for adjusting said sampling interval as a function of a layout of said scene;
- a module for determining the focal stack (500) as the set of consecutive focused images spaced an adjusted sampling interval apart from each other.

9. The apparatus of claim 8, **wherein** said adjusting module is configured for choosing a length of said sampling interval among at least two sampling interval lengths as a function of at least one identified object in said scene.

10. The apparatus of claim 8 or 9, **wherein,** each focused image of said scene being associated with a focalization distance, said adjusting module is configured for choosing:
- a shorter sampling interval for focalization distances targeted to correspond to a position (d1, d2) of an object of interest (401, 402) identified in said scene;
- a longer sampling interval for focalization distances located between two objects of interest, or between an object of interest and either a background plane or a foreground plane of said scene.

11. The apparatus of any of claim 10, **wherein** it also comprises:
- a module for assessing a depth of said object of interest;
- a module for determining a number of re-focused images to be spaced a shorter sampling interval apart from each other, as a function of said assessed depth.

12. The apparatus of claims 10 or 11, **wherein** it also comprises:
- a disparity estimation module for estimating disparities from said light field data set or from a matrix of views generated from said light field data set;
- a computing unit for computing said position of said object of interest in said scene from said estimated disparities.

13. A plenoptic image capture device comprising an apparatus according to any of claims 9 to 12.

14. A computer program product downloadable from a communication network and/or recorded on a medium readable by a computer and/or executable by a processor, comprising program code instructions for implementing a method according to any one of claims 1 to 7.

15. A non-transitory computer-readable medium comprising a computer program product recorded thereon and capable of being run by a processor, including program code instructions for implementing a method according to any one of claims 1 to 7.
